# EUROPEAN PATENT APPLICATION

(11) **EP 0 794 486 A2**
(43) Date of publication of application: **10.09.1997**
(21) Application number: 97102622.4
(22) Date of filing: 19.02.1997
(51) Int. Cl.: G06F 9/30

(54) **Register addressing for a demultiplexer**

(30) Priority: 06.03.1996 FI 961039
(71) Applicant: NOKIA TECHNOLOGY GmbH, 75175 Pforzheim (DE)
(72) Inventor: Hiltunen, Reino, 25250 Märynummi (FI)

(57) **Abstract**

The invention relates to microprocessor controlled devices, more particularly to the transferring of microprocessor addressing to the various components in the circuit. In the system of the invention, the microprocessor can direct through the address multiplexer used for controlling the DRAM memory also other circuit means connected to the same address lines, when the address multiplexer is adjusted in a state where it allows part of the address go through unchanged, at the same time preventing the DRAM memory from reacting to the address.

## Description

The invention relates to microprocessor controlled devices, more particularly to transferring the address of a microprocessor via the address lines of the DRAM memory to the various components of the system.

DRAM memory circuits are inexpensive, and their storage cells are simple in structure and small in size, which means that with DRAM technology, memory circuits with very high capacities can be produced. The DRAM circuits are often grouped into so-called memory banks, in which case the DRAM circuits are provided on separate small circuit boards, which are attached to the printed circuit board of the equipment by means of a separate connector. The DRAM memory banks can also contain one microcircuit only, in which case the apparatus includes one or more empty sockets for additional memory. This enables a later extension of memory capacity along with a continuous, intensive reduction in the prices of DRAM memories and an increase in their capacity.

The reading and writing of DRAM circuits takes place as follows. The address of a storage location is divided into two parts, and the first part, the row address, is first transferred to the DRAM circuit, and a RAS' (Row Address Strobe) signal is given. Thereafter the second part, the column address, is transferred to the DRAM circuit, and a CAS' (Column Address Strobe) signal is given. After the CAS' signal, the DRAM circuit either stores the data or retrieves the content of the desired storage location according to the read/write (R/W') signal. The address lines contained in the DRAM circuit constitute only half of the amount needed for addressing the memory space of the whole circuit, because the address is transferred into the circuit in two parts.

The division into two of the address, as well as the sending of the RAS' and CAS' signals, are traditionally realised by means of an address multiplexer and a DRAM controller, and thus the microprocessor using the DRAM memory need not take care of the signals required by the DRAM technique.

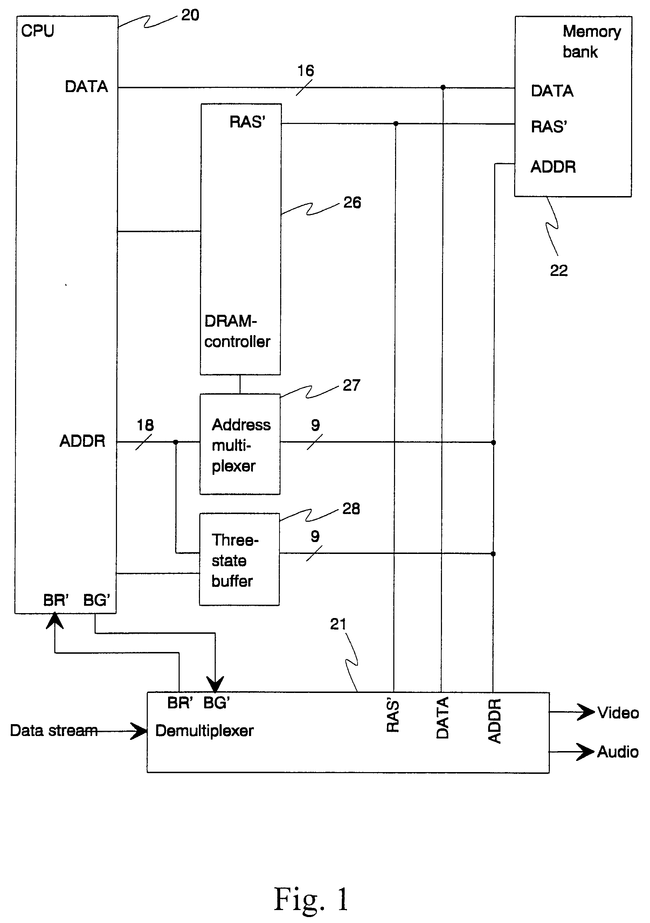

The same memory can well be utilised by more than one device. An example of this is shown in figure 1 illustrating a signal processing device, which breaks the incoming signal up into separate video and audio signals. The operation of the device is controlled by a microprocessor 20, but the actual processing is carried out by a demultiplexer 21. The microprocessor 20 and the demultiplexer share the same DRAM memory 22. The microprocessor needs memory for recording program code, tables etc., whereas the demultiplexer 21 needs memory for storing audio and video data. The microprocessor and the demultiplexer agree on the use of memory by mess of the BR' (Bus Request) and BG' (Bus Grant) signals. When the demultiplexer needs memory to its disposal, the demultiplexer sets a BR' signal. When the microprocessor then finishes its task, it indicates this by setting a BG' signal. Thereafter, the memory is at the disposal of the demultiplexer 21, until it resets the BR' signal. As for the microprocessor 20, the DRAM controller 26 and the address demultiplexer 27 take care of dividing the DRAM memory addresses into two as well as of sending the RAS' and CAS' signals in the fashion described above. The demultiplexer 21 takes care of controlling the DRAM memory circuits for its own part.

The demultiplexer contains a number of registers whereby the processor can affect its operation. The addressing of these registers is carried out through the same address gate that the demultiplexer uses when addressing the DRAM memory. However, the register addressing does not use a multiplexed addressing like the DRAM memories, but a direct 9-bit addressing from the processor address bus. Thus the processor cannot address the demultiplexer registers in the same fashion as the DRAM memory, because the address multiplexer 27 located between the address lines and the processor, needed for addressing the DRAM memory, sets the address in disorder from the point of view of the register addressing.

In known solutions of the above described register addressing problem, a 9-bit addressing for the demultiplexer is routed past the address multiplexer 27 via a three-state buffer 28, as is illustrated in figure 1. This buffer is in a high-impedance state in all other cases except for register addressing, in which case the address multiplexer 27 is set to a high-impedance state.

This solution has, however, its drawbacks. A three-state buffer is only needed for transferring the address to the demultiplexer, and the buffer requires its own 9-bit wide signal bus between the processor and the buffer, as well as in between the buffer and the demultiplexer. This uses up valuable space on the printed circuit board, and further, routing of wide buses causes difficulties when designing the printed circuit board.

The object of the invention is to achieve the addressing of a microprocessor for a demultiplexer in an essentially simpler fashion than in the known applications. Another object is to reduce the amount of components and the printed circuit board space required by the multiplexer register addressing.

Said objects are achieved by changing the DRAM controller and the structure of the address multiplexer, so that the address multiplexer can be directed to let part of the address coming from the microprocessor go through unchanged - in other words, so that the multiplexer can be directed not to function as a multiplexer.

The method of the invention is characterised in that said controller and address multiplexer are arranged to operate in two states: in the first state in order to conduct the memory address from said microprocessor to said memory device, in a form required by said memory device, and in the second state in order to conduct the register address from said microprocessor to a second circuit means in a form required by said means.

The invention also relates to a method where said controller and address multiplexer can be adjusted to either of two states, in the first of which the memory address is conducted from the microprocessor via the address multiplexer to a memory device, in a form required by said memory device, and in the second state the register address is conducted from the microprocessor to said second circuit means in the form required by said means.

The invention is explained in more detail below, with reference to the preferred embodiments described by way of example, and to the accompanying figures, wherein
figure 1 illustrates an arrangement according to the prior art, and
figure 2 illustrates an arrangement according to the present invention.

Like numbers for like parts are used in the drawings.

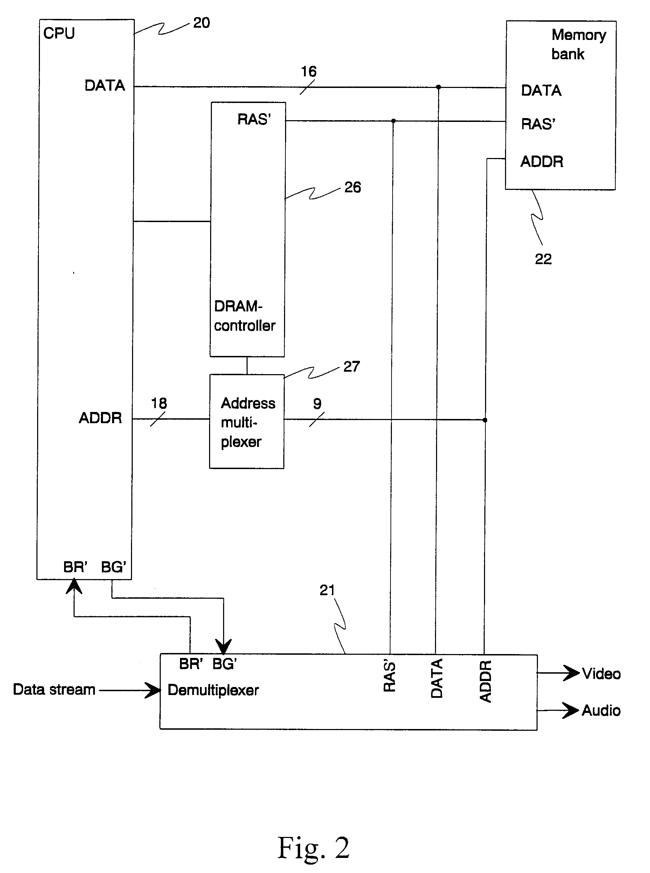

In the system according to the present invention, the address lines used for addressing the DRAM memory are also used for addressing the second circuit means (in the example of figures 1 and 2 the demultiplexer), so that the way of forming the addresses of said means differs from the way of forming the addresses of the DRAM memory.

The addressing of said circuit means takes place as follows. A microprocessor conducts the address multiplexer, by means of a DRAM controller, into a state where the address multiplexer allows part of the address go through directly, for instance the lower half, i.e. the 9 least significant bits, in which case the microprocessor can give an address which is, apart from the leading zeros, equal to the address received by said circuit means. Moreover, the microprocessor adjusts the DRAM controller to a state where it does not give DRAM memory control signals, or by other means set the DRAM memory in some other fashion, so that it does not react to the contents of the address bus. Thereafter the microprocessor sets the desired address on the address lines and the desired information on the data lines.

The system according to the invention has many advantages. The solution makes it possible to remove the three-state buffer, which simplifies the fabrication of the device and increases its reliability. An even more significant advantage is that the wide, 9-bits bus from the processor via the buffer to the demultiplexer is eliminated, which makes it easier to design the printed circuit board and above all saves valuable board space.

The structure of the memory device 22, illustrated by way of example in the figures, is not essential from the point of view of realising the invention. The memory device can comprise one DRAM circuit, one DRAM memory bank containing several DRAM circuits, or several DRAM memory banks containing several DRAM circuits.

Moreover, although we have above discussed DRAM memory as an example, the invention can also be applied to other memories or circuit means which use a different method for forming an address than some other circuit means of the system.

The different components of the system, such as the microprocessor, the DRAM memory, the demultiplexer and the address multiplexer are means known as such for a man skilled in the art. Likewise, a man skilled in the art is capable of performing the required alterations for realising the invention, with respect to known technology, in the DRAM controller and in the address multiplexer, even without a detailed description of the alterations.

## Claims

1. A system comprising
- a microprocessor (20)
- a memory device (22) to be addressed with a multiplexed address,
- a controller (26) and an address multiplexer (27) for controlling said memory device (22) and
- means (21) using the same memory device (22) as the microprocessor (20), the address lines of said means (21) being operationally connected to corresponding lines of the memory device (22) and said address multiplexer (27), which means (21) are arranged to receive address data from said microprocessor (20) by means of said address lines,
**characterised** in that said controller (26) and address multiplexer (27) are arranged to operate in two states, in a first state to transfer said memory address from said microprocessor (20) to said memory device (22) in a form required by said memory device (22), and in a second state to transfer a register address from said microprocessor (20) to said means (21) in a form required by said means (21).

2. A system according to claim 1, **characterised** in that the number of address lines from the address multiplexer (27) to said means (21) and to said memory device (22) is half of the amount of address lines leading from the microprocessor (20) to the address multiplexer (27).

3. A system according to claim 2, **characterised** in that the number of address lines from the address multiplexer (27) to said means (21) and said memory device (22) is 9, and the number of address lines from the microprocessor (20) to the address multiplexer (27) is 18.

4. A system according to any of the preceding claims, **characterised** in that said register address is formed of N least significant bits of the address given by the microprocessor (20) to the address multiplexer (27), where N is the number of address lines from the address multiplexer (27) to said means (21) and said memory device (22).

5. A method where a microprocessor (20) controls a memory device (22) and a second circuit means (21), said memory device (22) and second circuit means (21) having different addressing methods, via the same address lines, controller (26), and address multiplexer (27), **characterised** in that said controller (26) and address multiplexer (27) can be adjusted to one of two states, in the first state whereof the memory address is transferred from the microprocessor (20) via the address multiplexer (27) to the memory device (22) in a form required by the memory device (22), and in the second state the register address is transferred from the microprocessor (20) to said second circuit means (21) in the form required by said means.
